# EUROPEAN PATENT APPLICATION

(11) **EP 1 632 875 A2**
(43) Date of publication of application: **08.03.2006**
(21) Application number: 05107872.3
(22) Date of filing: 29.08.2005
(51) Int. Cl.: G06F 17/30

(54) **System and Method for Managing Information by Answering a Predetermined Number of Predefined Questions**

(30) Priority: 02.09.2004 US 932547
(71) Applicant: MICROSOFT CORPORATION, Redmond, Washington 98052-6399 (US)
(72) Inventor: Meyerzon, Dmitriy, 98052, Redmond (US); Li, Hang, 98052, Redmond (US); Sherman, Joseph M., 98052, Redmond (US); Cao, Yunbo, 98052, Redmond (US); Chen, Zheng, 98052, Redmond (US)
(74) Representative: Zimmer, Franz-Josef

(57) **Abstract**

The present invention is a system for answering questions. The present invention uses a data mining module to mine data, such as enterprise data, and to configure the data to answer a predetermined number of questions each having a predefined form. The present invention also provides a user interface component for receiving user queries and responding to those queries.

## Description

### BACKGROUND OF THE INVENTION

The present invention deals with information management. More specifically, the present invention deals with providing a question answering system that answers a predetermined number of questions having a predefined form based on a user input query.

Management of electronic information presents many challenges. One such challenge is the ability to provide information to users of an electronic system, in response to queries by the users. Conventional systems for performing this management task have typically broken down into two categories, one being question answering, and the other being information retrieval.

Conventional question answering systems have, as a goal, answering any type of free form questions which are entered by a user. While this may be a very useful system, it is also very challenging to implement.

For instance, if a user can enter substantially any query, in any form, the question answering system must typically employ one of a relatively few number of known methods for discerning the meaning of the user's query, before it attempts to answer the query. One technique involves natural language processing. Natural language processing typically involves receiving a natural language input and determining the meaning of the input such that it can be used by a computer system. In the context of question answering, the natural language processing system discerns the meaning of a natural language query input by the user and then attempts to identify information responsive to that query.

Another common technique involves implementing handwritten rules. In such a system, an author attempts to think of every possible way that a user might ask for certain information. The author then writes a rule that maps from those possible query forms to responsive information.

Both of these prior techniques for implementing question answering systems can be relatively expensive to implement, and can be somewhat error prone. In large part, the expense and errors arise from the fact that these systems attempt to answer substantially any question which the user can input.

Prior information retrieval systems attempt to use key words provided by a user and find documents relevant to the key words. This involves other disadvantages, i.e., they cannot easily meet users' different search requests. The information retrieval system attempts to balance recall and precision in returning results. In other words, information retrieval system conventionally attempts to maximize the amount of relevant information which is returned (maximize recall) while minimizing the amount of irrelevant information that is returned (i.e., maximizing precision) .

### SUMMARY OF THE INVENTION

Queries input by users into these types of systems primarily breakdown into three categories: informational, transactional, and navigational. An informational query, for instance, is one which asks questions such as "Who is X?", "What is X?" or "Who knows about X?". These types of queries simply seek information about a subject matter or person. Transactional queries typically involve the user asking a question about how to accomplish some sort of transaction, such as "Where do I submit an expense report?" or "Where can I shop for books?". The results sought by the user are often a destination or a description of a procedure of how to accomplish the desired transaction. Navigational queries involve the user requesting a destination link such as "Where is the homepage of X?" or "What is the URL for X?". With navigational queries, the user is typically seeking, as a result, a web page address or other similar link.

The present invention is a system for answering questions. The present invention uses a data mining module to mine data, such as enterprise data, and to configure the data to answer a predetermined number of questions, each having a predefined form. The present invention also provides a user interface component for receiving user queries and responding to those queries.

### BRIEF DESCRIPTION OF THE DRAWINGS

FIG. 1 is a block diagram of one illustrative environment in which the present invention can be used.
FIG. 2 is a block diagram of a system in accordance with one embodiment of the present invention.
FIG. 3 is a more detailed block diagram of a domain specific knowledge extraction system in accordance with one embodiment of the present invention.
FIG. 4 is a flow diagram illustrating the operation of the system shown in FIG. 3 in accordance with one embodiment of the present invention.
FIG. 5 is a more detailed block diagram of a metadata extraction system in accordance with one embodiment of the present invention.
FIG. 6 is a flow diagram illustrating the operation of a question answering system in accordance with one embodiment of the present invention.
FIG. 7 is a flow diagram illustrating the operation of a question answering system in accordance with one embodiment of the present invention.
FIG. 8 is a flow diagram illustrating the operation of a question answering system in accordance with one embodiment of the present invention.
FIGS. 9 and 10 illustrate user interface displays in accordance with one exemplary embodiment of the present invention.

### DETAILED DESCRIPTION OF ILLUSTRATIVE EMBODIMENTS

The present invention deals with a question answering system. More specifically, the present invention deals with a data mining module that mines data and a user interface that utilizes the mined data in order to perform question answering. However, before describing the present invention in greater detail, one illustrative embodiment of an environment in which the present invention can be used will be discussed.

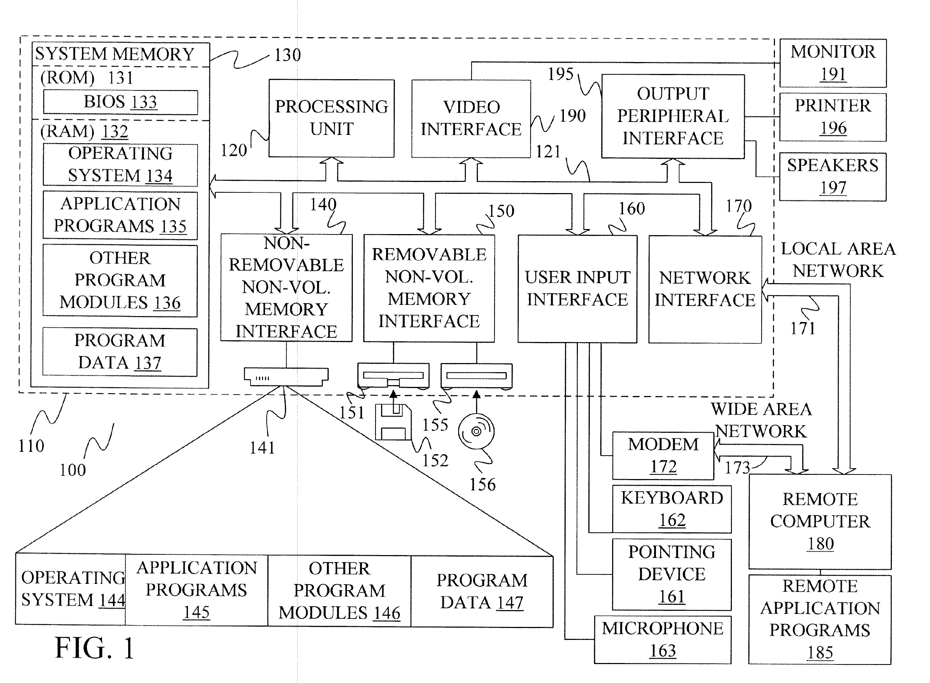

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well-known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, telephony systems, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention is designed to be practiced in distributed computing environments where tasks are performed by remote processing devices that are linked through a communications network. In a distributed computing environment, program modules are located in both local and remote computer storage media including memory storage devices.

With reference to FIG. 1, an exemplary system for implementing the invention includes a general-purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 is operated in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

The present description will proceed with respect to a question answering system that answers the questions "What is X?", "Who is X?", "Who knows about X?", and "Where is the homepage of X?" where "X" is entered by the user. However, it will be appreciated that fewer, different, or additional questions can be answered as well while maintaining the inventive concept of the present invention. For instance, the present invention can be used to answer questions such as "I need to do X" , "How to do X" , etc. However, the present invention maintains the number of questions allowed to a predetermined, relatively small number, such as approximately ten or fewer, and maintains the form of the questions as one of a number of predefined forms. Again, the present discussion proceeds with respect to the four questions having the predefined form mentioned above, but this is by way of example only.

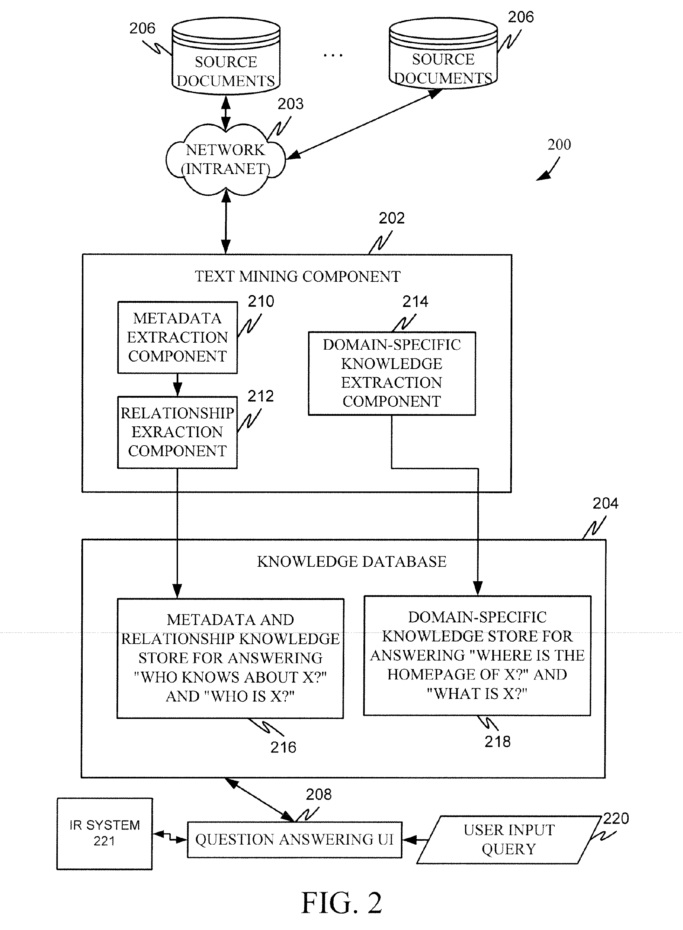

FIG. 2 is a block diagram of a system 200 for mining data that can be used in question answering. System 200 shows that text mining component 202 is connected through a network (such as an intranet or other network) 203 to a plurality of source documents 206. System 200 also shows text mining component 202 operably coupled to knowledge database 204 which is, itself, coupled to question answering user interface component 208. Component 208 is shown coupled to a conventional (and optional) information retrieval (IR) system 212 and receiving a user input query.

In operation, briefly, text mining component 202 receives access to source documents 206 through network 203. Text mining component 202 illustratively includes metadata extraction component 210, relationship extraction component 212 and domain-specific knowledge extraction component 214. As is described in greater detail below, metadata extraction component 210 receives text form source documents 206 and extracts relevant metadata to be used in answering questions. Relationship extraction component 212 also receives the text from source documents 206 and the output from metadata extraction component 210, and extracts relationship information which is used in answering questions. The information from components 210 and 212 is provided to knowledge database 204 and is stored in a metadata and relationship knowledge store 216 for answering questions such as "Who knows about X?" and "Who is X?", where "X" is input by the user.

As is also described in greater detail below, domain-specific knowledge extraction component 214 extracts domain-specific data from source documents 206 and provides it to domain-specific knowledge store 218 in knowledge database 204. The domain-specific information in knowledge store 218 is used, for example, to answer questions such as "Where is the homepage of X?" and "What is X?".

Question answering UI component 208 receives a user input query 220 and accesses knowledge base 204 to provide the user with an answer to the question. In one illustrative embodiment, question answering UI component 208 allows the user to select one of a predetermined number of predefined queries, or determines which of those predetermined, predefined queries the user is attempting to invoke. By limiting the number of queries to a predetermined number, and by limiting the specific form of the queries allowed to be one of a number of predefined forms, the present invention can answer nearly all queries requested by users, but avoids a number of the significant disadvantages associated with prior art question answering and information retrieval systems.

In another optional embodiment, UI component 208 is also coupled to a conventional IR system 221. System 221 illustratively employs a conventional IR search engine and accesses data in a conventional way (such as through a wide area network, e.g., the internet, or a local area network) in response to the input query. Thus, UI component 208 can integrate or otherwise combine question answering results from database 204 with conventional search results from system 221 in response to user input query 220.

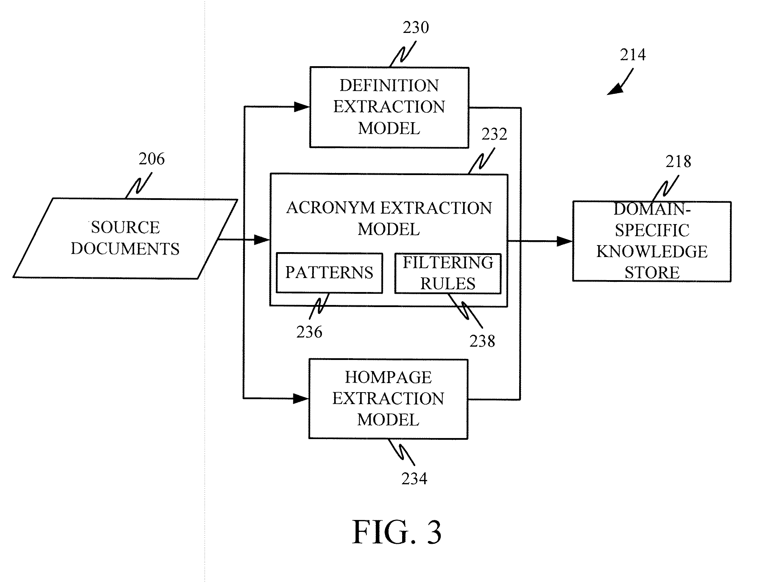

FIG. 3 is a more detailed block diagram of domain-specific knowledge extraction component 214. In the illustrative embodiment shown in FIG. 3, component 214 includes definition extraction model 230, acronym extraction model 232 and homepage extraction model 234. Models 230, 232 and 234 receive the content of source documents 206, extract definitions, acronym expansions, and homepages, and store that extracted information in domain-specific knowledge store 218. Of course, other domain-specific information can be extracted as well, but the three types shown in FIG. 3 are discussed herein for the sake of example only.

In the embodiment described herein, definition extraction model 230 is illustratively a statistical binary classifier which extracts from the text in source documents 206 all paragraphs which can serve as a definition of a concept. The classifier is trained by annotating training data and feeding that training data into a statistical classifier training module, which can implement one of a wide variety of known training techniques. One such training technique is well-known and trains the statistical classifier as a support vector machine (SVM). In accordance with that technique, features are obtained which are used to classify the text under consideration to determine whether it is a definitional paragraph. A wide variety of different features can be used by the classifier and one illustrative definition extraction feature list is illustrated in Table 1 below.

**Table 1 Definition Extraction Feature List**

| Category | Feature | Number | Weight |
|---|---|---|---|
| Main phrase features | Main phrase contains pronouns | 1 | -4.434 |
| | Main phrase contains many numbers (>20%) or time expressions (e.g., Monday, January) | 1 | -0.6215 |
| | Main phrase contains "this", "following" and "," | | Rule |
| | Main phrase is empty | | Rule |
| | Main phrase does NOT occur at the beginning of the text | 1 | -2.4105 |
| | Main phrase occurs more than two times in the text | 1 | 0.327 |
| | The sum of frequencies of words in main phrase is larger than 20% of the total frequency of the words in text | 1 | 3.186 |

**Feature List**

| Category | Feature | Number | Weight |
|---|---|---|---|
| Document Property features | Irregularity exists in text (i.e., the number of upper case letters is 2.5 times larger than the number of lower case letters) | 1 | -1.0155 |
| | Log (#words in text) /log(10) -0.7 (the longer the text the larger the value | 1 | 1.767 |
| | Text contains "is a", "is the" or "is an" | 1 | 6.732 |
| | Text contains "said" | 1 | -1.5455 |
| | Text contains "he", "her", "his" or "she" | 1 | -2.147 |
| | Word sequence immediately after main phrase contains "is a", "is an" or "is the" | 1 | 10.6655 |
| | Word in the window (size=5) after main phrase contains word in the "job list" (e.g., developer, reporter, PM) | 1 | -7.293 |

**Feature List**

| Category | Feature | Number | Weight |
|---|---|---|---|
| Bag of words feature | All high frequency words in the window after the main phrase (window size=7) (frequency>25) | 242 | |

The features illustrated in Table 1 identify such things as whether the first phrase in a paragraph is a noun phrase, and whether that noun phrase occurs frequently within the paragraph. If so, the paragraph is probably a definitional paragraph. The features also identify such things as whether pronouns occur in the main phrase of the paragraph. If so, it is probably not a definitional paragraph. Other features are illustrated as well, and they are each associated with a score.

Table 1 shows the category of each of the features listed, along with the number of bits associated with each feature, and the weight corresponding to each feature. The features are broken into categories of features that correspond to the main phrase of the text, those that correspond to the entire paragraph of the text, and those that correspond to the group of words which comprise the text. Of course, additional or different features can be used as well, they can be categorized differently, and they can be given different weights. Those illustrated in Table 1 are provided by way of example only. It should also be noted that where the weight is listed as "rule", that indicates that the weight is determined by a subsidiary rule which is applied to the particular text fragment.

In answering questions about definitions, definition extraction model 230 also illustratively ranks the definitions of concepts based on how closely the definitions correspond to the concepts. Therefore, when the user asks the question "What is X?", the definitional paragraphs extracted for "X" will be ranked in order of their relevance. Definition extraction model 230 thus outputs the results of processing source documents 206 as <concept, definition> pairs where the "concept" identifies the concept which is defined, and the "definition" provides the definition of that concept. These pairs are stored in domain-specific knowledge store 218, where multiple definitions for a single concept are illustratively ranked by relevance.

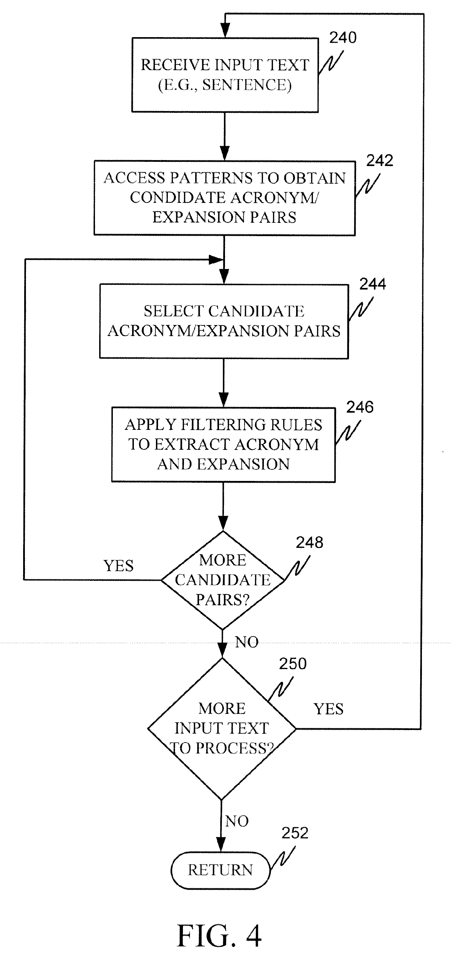

Acronym extraction model 232 illustratively includes patterns 236 and filtering rules 238. Acronym extraction model 232 illustratively receives source documents 206 and identifies acronyms, and the expansions of those acronyms, and generates <acronym, expansion> pairs which are also stored in domain-specific knowledge store 218. Identifying the acronyms and expansions and generating the pairs is illustratively viewed as a pattern matching problem. Therefore the text in source documents 206 is matched to patterns 236 and the matches are filtered using filtering rules 238 in order to obtain the acronym, expansion pairs. This is illustrated in greater detail in FIG. 4. Table 2 illustrates acronym extraction patterns and filtering rules. Of course, other patterns and rules can be used as well and those shown in Table 2 are exemplary only.

**Table 2 Acronym Extraction Patterns and Filtering Rules**

| **Patterns** |
|---|
| **Pattern 1: *<expansion>* (*<acronym>*)** |
| Most examples match to this pattern. |
| Example: |
| Learn key technologies. The .NET Framework also makes heavy use of the Extensible Markup Language (XML) and related standards like XML schemas and XML namespaces: |
| **Pattern 2:<a*cronym*> (<expansion>)** |
| Second most frequently matched pattern. |
| Example: |
| StorageWorks was a new generation of storage solutions designed to meet requirements for open, flexible data storage based on the industry 's widely accepted SCSI-2 ( Small Computer System Interface-2 ) standard . |

| **Pattern 3:<*acronym* > stands for *<expansion>*** |
|---|
| Relatively low frequency in the data collection. |
| Example: |
| What's MSBPN by the way? - MSBPN stands for Microsoft Business Partner's Network |

| **Filtering Rules** |
|---|
| **Rule 1: Capital letters match (Type Code: 0)** |
| Acronym: All characters are capital letters. |
| Expansion: The shortest string containing the same ordered characters in the acronym. |
| Examples: |
| Active Directory is implemented using the Lightweight Directory Access Protocol (LDAP) .NET Component Builder Program (.NET CBP) |

| **Rule 2: Capital letters and other characters match (such as little letters, white spaces, &, - or / etc.) (Type Code: 1)** |
|---|
| Acronym: capital letters and a few little letters, white space, &, -, or / |
| Expansion: the shortest string containing the same ordered characters in acronym. |
| Examples: |
| Transport Control Protocol/Internet Protocol (TCP/IP). Network protocol common to both UNIX and Windows NT. |
| L&SA (License & Software Assurance) = Point value designated when License & Software Assurance is offered for the product indicated. |
| Web Text Chat, e-mail, Voice-over IP (VoIP), and Web collaboration. |

| **Rule 3: One of the characters may be in lower case in expansion. (Type Code: 2)** |
|---|
| Acronym: All characters except one are in upper case, the exception is lower case, &, - or / |
| Expansion: the shortest string containing the same ordered characters in acronym, but one of the letters is in lower case in expansion. **(In this example, we allow only one lowercase letter, but more loose rules may be used but may also introduce more errors.)** |
| Examples: |
| Internet Engineering Task Force Request for Comments (RFC) 793, September, 1981. |
| Learn key technologies. The .NET Framework also makes heavy use of the Extensible Markup Language (XML) and related standards like XML schemas and XML namespaces; |
| The information in this article applies to: Microsoft SQL Server 2000 Desktop Engine (MSDE) SP1 |

| **Rule 4: Special characters (-, & and /) in acronyms are absent in expansion (Type Code: 3)** |
|---|
| Acronym: capital letters and a few lowercase letters, &, - or / |
| Expansion: the shortest string containing the same ordered characters in acronym, special characters (- & /) are ignored. |
| Examples: |
| However, you can run SQL Distributed Management Object (SQL-DMO) code in Visual Basic or |
| Applications (VBA) to change the security setting, as follows: On the client computer, open Microsoft Access. |
| Thin Ethernet 10 Mb/s Single LANs Thin Ethernet links have a linear bus topology and use a Carrier Sense Multiple Access with Collision Detection (CSMA/CD) access method with thin or twisted-pair cable. |

FIG. 4 shows a flow diagram showing how acronym, expansion pairs are generated with model 232. First, the input text is received (such as sentence-by-sentence). This is indicated by block 240 in FIG. 4. Next, the patterns 236 are accessed to obtain candidate acronym/expansion pairs. This is indicated by block 242.

Once candidate acronym, expansion pairs have been identified using the patterns shown in Table 2, the filtering rules are applied to each of the candidate acronym, expansion pairs. This is indicated by blocks 244, 246 and 248 in FIG. 4. Thus, applying the patterns to the source documents 206 identifies potential acronym expansion pairs and applying the filtering rules determines whether they are indeed acronym expansion pairs and also identifies the particular bounds of the expansion associated with identified acronyms.

FIG. 4 also shows that all of the text in the source documents 206 is illustratively processed. This is indicated by block 250 and 252.

Homepage extraction model 234 can illustratively be a pattern matching model or a statistical model, as desired. Of course, other ways for identifying homepages in source documents 206 can be employed as well. For instance, if the tool used to create the web page has an attribute or identifier which identifies a particular page as the "homepage", model 234 can simply review that attribute of the page to determine whether it is a homepage.

In the embodiment in which homepage extraction model 234 is a binary classifier, the classifier is trained from labeled training data, using any suitable statistical classifier training technique. The classifier is trained to determine whether a web page is a homepage associated with a group or person, for instance.

In the embodiment shown in FIG. 3, homepage extraction model 234 passes through all web pages contained in source documents 206 and provides, as a result, <title, URL> pairs which are stored in domain-specific knowledge store 218. The title in those pairs refers to the name of a group or person for which the URL homepage is identified. The URL is illustratively the uniform resource locator which comprises the address of the homepage of the group or person identified in the title.

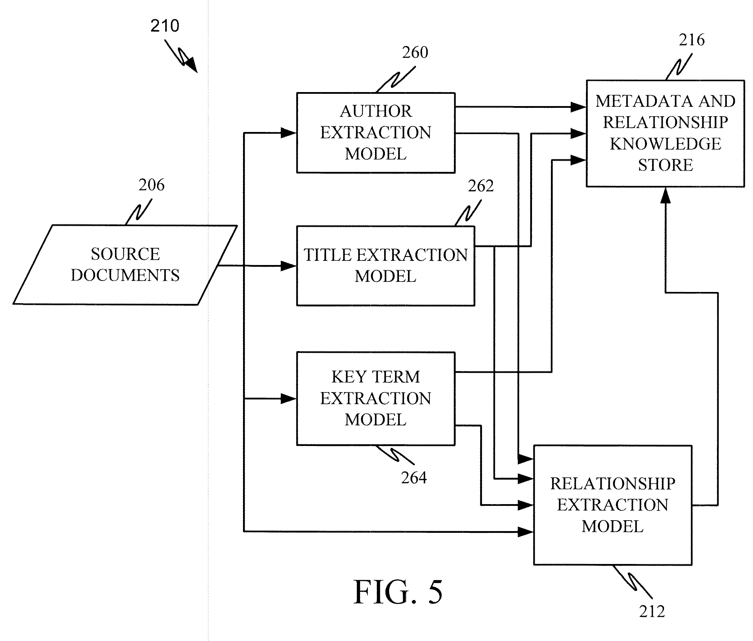

FIG. 5 is a more detailed block diagram of metadata extraction component 210 and relationship extraction component 212. In one illustrative embodiment, metadata extraction component 210 extracts information such as the author of source documents 206, the title of those documents, and key terms contained in those documents. Of course, other metadata can be extracted as well, and that illustrated in FIG. 5 is illustrated for the sake of example only.

It should also be noted that the metadata to be extracted may be contained in actual metadata fields associated with source documents 206. However, it has been found that such metadata is often inaccurate. In fact, it has been found that, in some instances, the metadata associated with source documents 206 is inaccurate as much as 80 percent of the time. Therefore, the present invention uses component 210 to extract metadata, such as author, title and key terms, from the content of the source documents 206, as opposed to any metadata fields associated with those documents.

In the embodiment discussed herein, the extraction of author and title information from source documents 206 is performed by author extraction model 260 and title extraction model 262. Models 260 and 262 are illustratively statistical classifiers that are trained to determine whether several consecutive lines comprise an author or title. Also, in one exemplary embodiment, for HTML documents, only titles are extracted, although other information could be extracted as well.

One exemplary feature list used by author extraction model 260 is shown in Table 3.

**Table 3 Features List for Author Extraction**

| **Category** | **Feature** | **Bits** | **Weight** | |
|---|---|---|---|---|
| | | | **Doc** | **Ppt** |
| Smart tag | If there are personal names recognized by smart tag in the unit, this feature will be 1. | 1 | 3.597 | 10.013 |
| Name list | If there are personal names exist in a pre-defined name list, this feature will be 1. | 1 | 6.474 | 9.992 |
| Uppercase | If the first letter of each word is not capitalized, this feature will be 1. | 1 | -3.54 | -0.004 |
| Positive | When the unit contains some words, such as "author: " and "written by ", it will be 1. | 1 | 13.59 | 10.016 |
| Negative words | When the unit begins with or contains these words, it will be 1. For example, if the unit begin with "To: " or "Copy to: ". | 1 | -4.46 | -0.027 |
| Character count | If the number of characters in the unit is larger than 64 and is smaller than 128, this feature will be 1. | 1 1 | -5.56 | -9.964 |
| | If the number of characters in the unit is larger than 128, this feature will be 1. | 1 | -0.66 | -10.009 |
| Average word count | Average word number separated by comma. For example, if the unit is "Hang Li, Min Zhou", the average word number of this unit will be (2+2)/2=2.If the value is between 2 and 3, this feature will be 1. | 1 | 0.010 | 0.004 |
| | If the count is larger than 3, this feature will be 1. | 1 | 0.000 | 0.000 |
| Period mark | Personal names can contain ".", e.g. "A.J. Mohr" and "John A.C. Kelly". If the unit contains the pattern: capital +"."+blank, the feature of this category will be 1. | 1 1 | 6.421 | 0.012 |

Again, the features shown in Table 3 are identified by category, by the specific feature used, by the bits associated with each feature (i.e., the number of bits used to identify whether the feature is present or absent in the text being processed) and the weight associated with that feature. It can be seen from Table 3 that the weights may vary depending on the type of document being processed. For instance, if the document is a word processor document, the weights may have one value while if the document is a presentation (such as slides), the weights may have a different value.

Title extraction model 262 may illustratively be comprised of two models which are used to identify the beginning and ending of a title in a text fragment. Table 4 is a feature list for title extraction model 262 when it is implemented as a statistical classifier. In one illustrative embodiment, title extraction model 262 receives text fragments from the first page of word processing documents and from the first slide of slide presentations.

**Table 4 Feature List for Title Extraction**

| **Category** | **Feature** | **Bits** | **Weight1** | | **Weight2** | |
|---|---|---|---|---|---|---|
| | | | **Doc** | **Ppt** | **Doc** | **Ppt** |
| Font size | The unit has the largest font size. If all units have the same font size, they will have this feature being 1. | 1 | 0.102 | 4.420 | 0.759 | 4.498 |
| | The unit has the second largest font size | 1 | 0.005 | 0.007 | 0.006 | 0.004 |
| | The unit has the third largest font size | 1 | 0.100 | 0.010 | 0.544 | 0.058 |
| | The unit has the fourth largest font size | 1 | -0.14 | -0.01 | -0.60 | -0.05 |
| | The unit has the smallest font size | 1 | -9.92 | -2.61 | -9.25 | -2.53 |
| Word count | If the word count of unit is 1 or 2, this feature will be 1, otherwise it will be 0. | 1 | 8.118 | 0.462 | 4.552 | 1.887 |
| | If the word count of unit is between 3 and 6, this feature will be 1, otherwise it will be 0. | 1 | 8.155 | 0.466 | 4.613 | 1.894 |
| | If the word count of unit is between 7 and 9, this feature will be 1 otherwise it will be 0. | 1 | 8.155 | 0.463 | 4.602 | 1.892 |
| | If the word count of unit is between 10 and 15, this feature will be 1, otherwise it will be 0. | 1 | 8.155 | 0.468 | 4.592 | 1.888 |
| | If the word count of unit is big than 15, this feature will be 1, otherwise it will be 0. | 1 | 8.135 | 0.467 | 4.610 | -5.09 |
| Bold face | Unit has bold face. | 1 | 0.024 | 0.000 | 0.066 | 0.001 |
| Alignment | Unit's alignment is center. | 1 | 0.039 | 0.004 | 0.045 | 0.006 |
| Single unit | If the region for extraction has only this unit, this feature will be 1. | 1 | 0.047 | 0.000 | 9.993 | 0.005 |
| Positive words | When the unit begins with or contains these words, it will be 1. For example, if the unit begin with "Title: ", it will be 1. | 1 | 0.076 | 14.09 | 0.093 | 14.10 |
| Negative words | When the unit begins with or contains these words, it will be 1. For example, if the unit begin with "By: " or "To: ", it will be 1 | 1 | -10.030 | -7.00 | -20.0 | -6.9 |
| Font size change | In the model of title beginning, if the previous unit has different font size, this feature will be 1. In the model of title end, if the next unit has different font size, then this feature will be 1. | 1 | 10.035 | 7.028 | 9.984 | 7.020 |
| Paragraph number change | In the model of title beginning, if the previous unit has different paragraph number (from Office Automation), this feature will be 1. In the model of title end, if the next unit has different paragraph number, then this feature will be 1. | 1 | 10.014 | 1.974 | 0.084 | 0.004 |
| Alignment change | If the consecutive two units have different alignments, this feature will be 1; Now we only consider if the alignment is changed from center to others or from others to center. | 1 | -0.016 | -0.012 | 0.008 | 0.006 |

Table 4 illustrates the category, feature, number of bits corresponding to each feature, and the weights associated with each feature. In Table 4, weight one corresponds to the first model that identifies the beginning of a title, and weight two corresponds to the second model that identifies the end of the title. It can also be seen that the weights corresponding to each feature may also vary based on the type of document being processed.

Key term extraction model 264 is used to extract key terms from the source documents 206. The key terms are illustratively indicative of the contents of a given document being processed. These terms illustratively identify the concepts being described in the document. Model 264 can use any of a wide variety of different techniques for identifying key terms or content words in a document. Many such techniques are commonly described for indexing documents in information retrieval systems. One such technique is the well-known term frequency * inverse document frequency (tf*idf). However, other techniques simply include examining the position and frequency of a term. If the term tends to appear at the beginning of a document and is used frequently throughout the document, then it is likely a key term.

Relationship extraction model 212 receives the outputs from models 260, 262 and 264 and also receives source documents 206. Relationship extraction model 212 generates <concept, person> pairs that identify relationships between people and concepts. These pairs can be used, for instance, to answer questions such as "Who knows about X?", and "Who is X?" In order to generate these types of pairs, relationship extraction model 212 determines, for instance, whether a "concept" and a "person" appear in the title and author portions of the same document, respectively. If so, then the concept, person pair is created. Model 212 also determines whether a "concept" and "person" appear in the key term and author portions of the same document, respectively. If so, the concept, person pair is created. Similarly, model 212 can determine whether a "concept" and "person" co-occur frequently within a document collection. If so, the pair is created as well. Of course, additional or different tests can be used to determine whether a concept, person pair should be created.

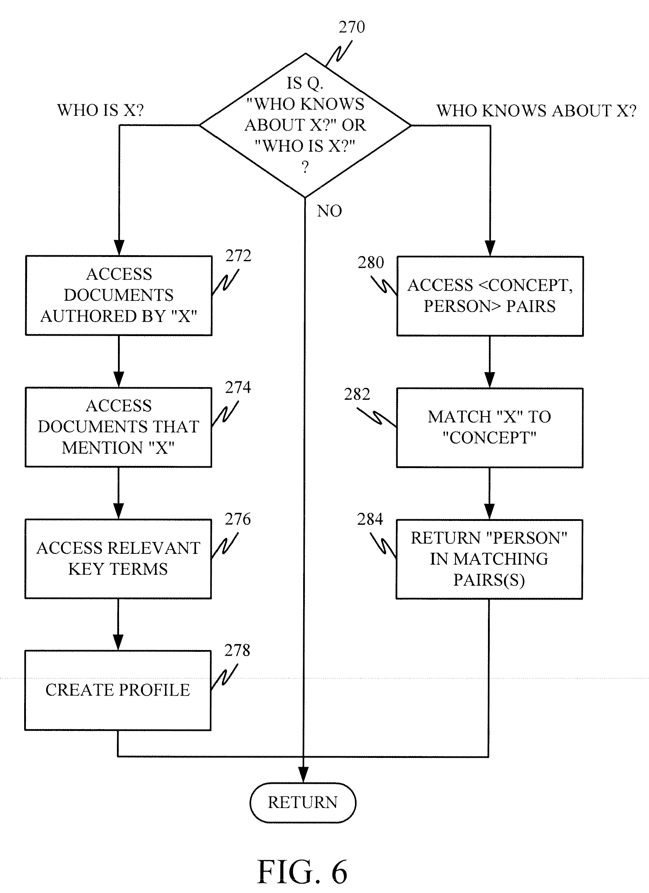

Once knowledge stores 216 and 218 are created, question answering UI component 208 can be used to answer queries provided by a user. UI component 208 can be integrated into system 200 in any of a wide variety of ways. A number of these ways will be described below. Suffice it to say, for now, that UI component 208 receives a query which is one of the four queries discussed above ("Who is X?", "Who knows about X?", "What is X?", and "Where is S the homepage of X?"). FIG. 6 is a flow diagram illustrating how UI component 208 answers the two questions "Who is X?" and "Who knows about X?".

First, UI component 208 determines which of these two questions is being asked by the user. This is indicated by block 270 in FIG. 6. This can be done in a variety of different ways. For instance, UI component 208 can present the user with a list of check boxes that allow the user to check which particular query is being submitted. Such an interface will also illustratively provide a text box so the user can enter text corresponding to "X".

Assuming that component 208 identifies the question as "Who is X?", then component 208 accesses the documents that are authored by the person "X". This is indicated by block 272 in FIG. 6. This can be identified by simply accessing the author, title pairs (or person, title pairs) generated by relationship extraction model 212 and stored in knowledge store 216.

Component 208 also accesses documents that mention the person "X". This is indicated by block 274 in FIG. 6. This is done by determining whether the person "X" appears either as a key term or as a person within the text of a document by accessing the information in knowledge store 216.

Component 208 then accesses relevant key terms. This is indicated by block 276. Relevant key terms are those terms which appear in the documents authored by the author "X" or in the documents that mention "X".

After accessing all this information, component 208 creates a profile of the person "X". This is indicated by block 278 in FIG. 6. The profile illustratively includes the list of documents that the person "X" authored, or in which the person "X" is mentioned. The profile will also illustratively include the document list that is obtained using the metadata of the author, title pair. The top n key terms (such as the top twenty key terms) that most frequently appear in the documents authored by the person "X" are also illustratively listed.

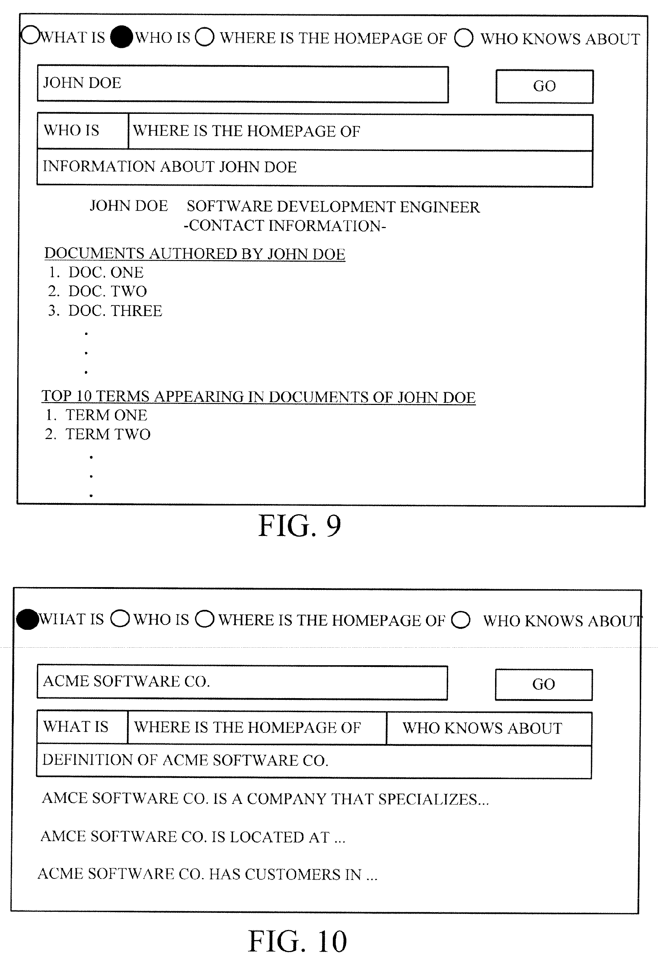

One illustrative embodiment of an output from UI component 208 in answering the question "Who is John Doe?" is illustrated in FIG. 9. The display of FIG. 9 shows that the user has checked the "Who is" check box at the top of the display and then has entered the term "John Doe" in a text box. The result returned includes two tabs "Who is" and "Where is the homepage of". The user has selected the tab "Who is" and the display shows information about John Doe. The display illustratively shows John Doe's title and contact information (which will illustratively be gleaned from source documents input in developing knowledge base 204) and then lists the documents authored by John Doe as well as the top ten terms appearing in documents which were authored by John Doe. Of course, FIG. 9 shows but one exemplary embodiment of a UI display and any other suitable displays can be used as well.

Returning again to FIG. 6, if at block 270 UI component 208 determines that the user has asked "Who knows about X?", then component 208 accesses the concept, person pairs stored in knowledge store 216 and matches the text in "X" to the "concept" in the concept, person pairs. This is indicated by blocks 280 and 282. UI component 208 then returns the "person" portion of matching concept, person pairs as the answer to the question input by the user. This is indicated by block 284 in FIG. 6.

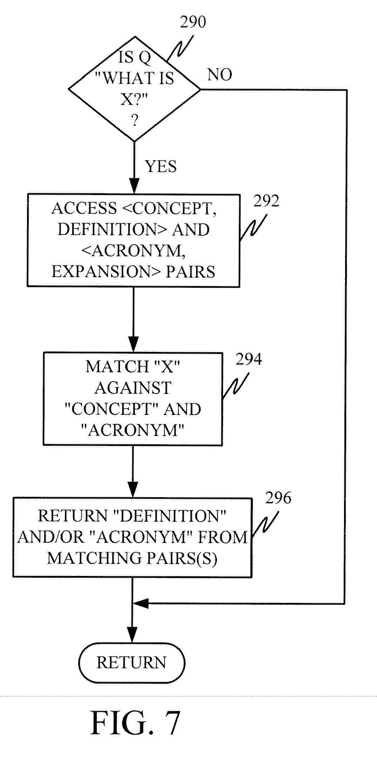

FIG. 7 is a flow diagram illustrating the operation of UI component 208 in answering the question "What is X?". It is first determined that UI component 208 has identified the query input from the user as being in the form of "What is X?". This is indicated by block 290 in FIG. 7. Component 208 then accesses the concept, definition pairs and acronym, expansion pairs stored in knowledge store 218. This is indicated by block 292 in FIG. 7. Component 208 then matches the "X" input by the user against the "concept" and "acronym" portions of the concept, definition pairs, and acronym, expansion pairs. This is indicated by block 294 in FIG. 7. Component 208 then returns the "deflnition" portion of the matching concept, definition pairs and the "acronym" portion from the matching acronym, expansion pairs. This is indicated by block 296.

FIG. 10 is one illustrative embodiment of a display provided by UI component 208 in answering the "What is?" question. FIG. 10 shows that the user has checked the "What is?" box at the top of the display indicating the form of the query. The user has also typed in the text "ACME Software Co" in the text box. The results are returned on the lower portion of the display shown in FIG. 10 and include three tabs labeled "What is", "Where is the homepage of", and "Who knows about". The user has selected the "What is" tab which indicates that the displayed information is related to a definition of the ACME Software Co. It can be seen from the short experts illustrated in FIG. 10 that component 208 provides one or more paragraphs of definitional information relating to the ACME Software Co., although it should be noted that only the first few words of each paragraph are shown in FIG. 10, for the sake of simplicity, it being understood that the entire paragraph or larger portions of it would be displayed in actuality.

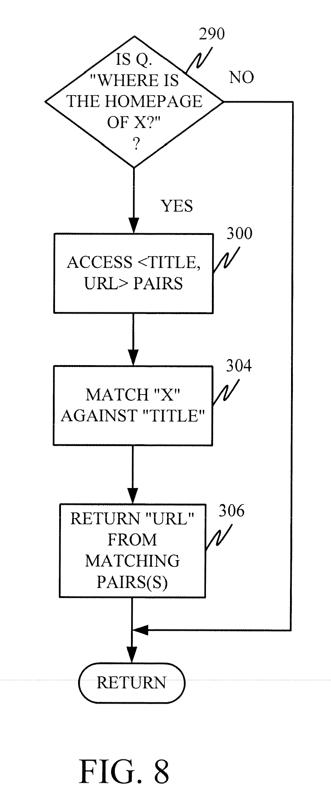

FIG. 8 is a flow diagram which illustrates the operation of UI component 208 in answering a question of the form "Where is the homepage of X?". This is indicated by block 300 in FIG. 6. Component 208 then accesses the title, URL pairs in knowledge store 218. This is indicated by block 302. In doing so, component 208 matches the user input "X" against the "title" portion of the title, URL pairs. This is indicated by block 304 in FIG. 8. Component 208 then returns the "URL" portion from matching title, URL pairs as indicated by block 306.

It should be noted that, as discussed previously, UI component 208 can access IR system 221 based on the user input and return IR search results as part of the question answering results. The IR results may be requested by the user by checking an appropriate box, or the IR results can be generated automatically.

It will be appreciated that UI component 208 can be integrated into system 200 in one of a variety of different known ways. One of those ways is illustrated by FIGS. 9 and 10 in which the user simply checks the form of the query being input and then types the specific content of the query into a text box. In doing this, the decision as to the form of the query is made by the user and component 208 simply needs to access the relevant data stores to retrieve the requested information. It should also be noted that the user can check multiple check boxes and get multiple sets of results in that way.

Of course, other techniques can be used as well. For instance, if the user types in the entire query, and it is ambiguous, the present invention can return responses to all four different queries, if they are relevant. This is also illustrated in FIGS. 9 and 10. For instance, if component 208 has populated the nonselected tabs in the result sections of those displays, then the user can view responses to different queries (different than the one the user selected) in the results. For example, FIG. 10 has tabs corresponding to the "What is" query, the "Where is the homepage of" query, and the "Who knows about" query. These tabs are all populated and provided in response to the user selecting the "What is" query at the top of the page. The user can select the different tabs in order to review the different information. Therefore, a similar UI can be provided where the user does not need to check the form of the query, but instead responses to all four queries (or all relevant ones) are provided in every case.

Similarly, UI component 208 can be integrated into system 200 by training a model to determine the form of the query based on the user's input. For instance, such a model may be a four way classifier which is applied to ambiguous inputs in order to classify the query into one of the four predetermined forms. Similarly, the present system can be implemented to engage in a dialog with the user, to disambiguate the input and specifically identify the form of the query which the user desires. The dialog can request more information from the user or provide suggestions to the user such as check spelling, try using synonyms, etc.

It can thus be seen that the present invention greatly simplifies the question answering process and yet still covers a vast majority of different types of questions that the user may wish to ask. By limiting the number of different forms of query to a predetermined number having predefined forms, the present invention can quickly and easily mine text and generate and store data structures or records that are suitable for answering those limited number of different query types. In other words, because the present system knows the form in which the queries will be presented, and because the number of allowed forms is relatively small, it can easily arrange the data in the data stores that represent the mine text in a form that is highly suitable for answering those queries.

Although the present invention has been described with reference to particular embodiments, workers skilled in the art will recognize that changes may be made in form and detail without departing from the spirit and scope of the invention.

## Claims

1. A document processing system, comprising:
a data mining component configured to extract data from source documents and to generate records indicative of the extracted data, the records having forms that correspond to a predetermined number of questions, each question having a predefined form.

2. The document processing system of claim 1 wherein the data mining component comprises:
a metadata extraction component configured to extract metadata from a content portion of the source documents and generate metadata records indicative of the metadata.

3. The document processing system of claim 2 wherein the metadata extraction component comprises:
an author extraction component configured to extract authors of the source documents.

4. The document processing system of claim 2 wherein the metadata extraction component comprises:
a title extraction component configured to extract titles of the source documents.

5. The document processing system of claim 2 wherein the metadata extraction component comprises:
a key term extraction component configured to extract key terms from the source documents.

6. The document processing system of claim 2 wherein the data mining component comprises :
a relationship extraction component configured to receive an indication of authors, titles and key terms in the source documents and to extract relationship information, indicative of a relationship between a person and a subject matter, from the source documents.

7. The document processing system of claim 1 wherein the data mining component comprises:
a domain-specific data extraction component configured to extract domain-specific data from the source documents and generate domain-specific data records indicative of the domain-specific data.

8. The document processing system of claim 7 wherein the domain-specific data extraction component comprises:
a definition extraction component configured to extract definitional information from the source documents.

9. The document processing system of claim 7 wherein the domain-specific data extraction component comprises:
an acronym expansion component configured to identify acronyms and corresponding expansions in the source documents.

10. The document processing system of claim 7 wherein the domain-specific data extraction component comprises:
a homepage extraction component configured to identify homepages in the source documents.

11. The document processing system of claim 1 and further comprising:
a data store storing the records indicative of the extracted data.

12. The document processing system of claim 11 and further comprising:
a user interface component configured to receive a user input query and search the data store, based on the user input query, for a response to one of the predetermined number of questions, each question having the predefined form.

13. The document processing system of claim 12 wherein the predetermined number of questions comprises approximately ten or fewer.

14. The document processing system of claim 12 wherein the predetermined number of questions comprises approximately four.

15. The document processing system of claim 14 wherein the predefined form of the questions comprises one or more of the group consisting essentially of:
who is;
what is;
where is the homepage of; and
who knows about.

16. The document processing system of claim 12 wherein the user interface component provides a display for user selection of one of the predetermined number of questions.

17. The document processing system of claim 16 wherein the user interface component is configured to determine which predefined form the user query is in.

18. The document processing system of claim 12 and further comprising an information retrieval system, coupled to the user interface component, configured to generate information retrieval results in response to the user input query.

19. A question answering system, comprising:
a data store storing data extracted from a plurality of source documents; and
a user interface component configured to receive a user input query and search the data store, based on the user input query, for a response to one of a predetermined number of questions, each question having a predefined form.

20. The question answering system of claim 19 wherein the user interface component provides a display for user selection of one of the predetermined number of questions.

21. The question answering system of claim 19 wherein the user input component is configured to search the data store for responses to a plurality of the predetermined number of questions based on a single user input query.

22. The question answering system of claim 19 wherein the data store stores records indicative of the extracted data.

23. The question answering system of claim 22 wherein the records comprise:
domain-specific records indicative of extracted domain-specific data.

24. The question answering system of claim 23 wherein the domain-specific records comprise definition records indicative of definitional text in the source documents.

25. The question answering system of claim 23 wherein the domain-specific records comprise acronym records indicative of acronyms and corresponding expansions in the source documents.

26. The question answering system of claim 23 wherein the domain-specific records comprise homepage records indicative of homepages in the source documents.

27. The question answering system of claim 22 wherein the records comprise metadata records indicative of metadata extracted from content of the source documents.

28. The question answering system of claim 27 wherein the metadata records comprise author records indicative of authors of documents in the source documents.

29. The question answering system of claim 27 wherein the metadata records comprise title records indicative of titles of the source documents.

30. The question answering system of claim 27 wherein the metadata records comprise key term records indicative of key terms in the source documents.

31. The question answering system of claim 27 wherein the records comprise relationship records indicative of extracted relationships between people and subject matter.

32. The question answering system of claim 20 wherein the predetermined number of questions comprises no more than approximately ten.

33. The question answering system of claim 32 wherein the predetermined number of questions comprises approximately four.

34. The question answering system of claim 22 and further comprising:
a data mining component configured to extract the data from source documents and to generate the records indicative of the extracted data, the records having forms that correspond to the predefined forms of the predetermined number of questions.

35. A method of processing source documents, comprising:
extracting data from the source documents;
generating records indicative of the extracted data, the records having forms that correspond to one or more predefined forms of a predetermined number of questions; and
storing the records in a data store.

36. The method of claim 35 wherein extracting data comprises:
extracting metadata from a content portion of the source documents.

37. The method of claim 36 wherein extracting data comprises:
extracting relationship information, indicative of a relationship between a person and a subject matter, from the source documents.

38. The method of claim 35 wherein extracting data comprises:
extracting domain-specific data from the source documents.

39. The method of claim 35 and further comprising:
receiving a user input query; and
searching the data store, based on the user input query, for a response to one of the predetermined number of questions.

40. The method of claim 39 wherein receiving a user input query comprises:
providing a display for user selection of one of the predetermined number of questions.
